(19) Europäisches Patentamt
European Patent Office
Office européen des brevets

(11) **EP 3 838 660 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **20000448.9**

(22) Anmeldetag: **09.12.2020**

(51) Internationale Patentklassifikation (IPC):
**B60N 2/02** *(2006.01)*      **F16F 1/18** *(2006.01)*
**G05G 5/18** *(2006.01)*

(52) Gemeinsame Patentklassifikation (CPC):
**B60N 2/0228; F16F 1/182; G05G 5/18**

(54) **BEDIENELEMENT**

OPERATING ELEMENT

ÉLÉMENT DE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.12.2019   DE 102019135070**

(43) Veröffentlichungstag der Anmeldung:
**23.06.2021   Patentblatt 2021/25**

(73) Patentinhaber: **GRAMMER AG**
**92289 Ursensollen (DE)**

(72) Erfinder:
• **Dotzler, Florian**
  **92242 Hirschau (DE)**
• **Schanderl, Florian**
  **92521 Schwarzenfeld (DE)**

(74) Vertreter: **Hannke Bittner & Partner mbB**
**Regensburg**
**Prüfeninger Straße 1**
**93049 Regensburg (DE)**

(56) Entgegenhaltungen:
**WO-A1-2020/074684      DE-A1- 102011 014 234**
**US-A- 5 662 000**

EP 3 838 660 B1

**Beschreibung**

Die Erfindung betrifft ein Bedienelement insbesondere für einen Fahrzeugsitz, umfassend ein zweites Element, welches relativ zu einem ersten Element bewegbar ist, wobei durch die Bewegung des zweiten Elements ein Bowdenzug betätigt wird, wobei die Bewegung des zweiten Elements durch eine Rastvorrichtung arretierbar ist.

Ein Fahrzeugsitz weist eine Vielzahl an Komponenten auf, mittels welche sogenannte Sitzparameter einstellbar sind. Dem Insassen sollte es ermöglicht sein, die jeweiligen Sitzparameter zu modifizieren und seinen Bedürfnissen anzupassen. Derartige Sitzkomponenten können beispielsweise Feder- und oder Dämpfungssysteme sein. Die entsprechenden zu modifizierenden Sitzparameter wären beispielsweise die Federhärte, beziehungsweise die Dämpferhärte. Weitere Sitzparameter können beispielsweise die Neigung der Rückenlehne oder die Sitzhöhe sein. Zur Einstellung dieser Parameter sind entsprechende Einrichtungen vorgesehen.

In der Regel sind derartige Komponenten, beziehungsweise Einrichtungen nicht direkt durch den Nutzer bedienbar. Demnach ist es erwünscht, dass ein Bedienelement vorgesehen ist, welches an einem für den Insassen gut zugänglichen Ort an dem Fahrzeugsitz angeordnet ist. Für die Übertragung einer Bewegung des Bedienelements oder entsprechenden Kräften kann ein Bowdenzug vorgesehen sein. Derzeit bekannte Bedienelemente für Bowdenzugsysteme umfassen eine Vielzahl von Komponenten und sind demnach aufwändig herzustellen. Ferner kommt es bei den bekannten Bedienelementen aufgrund der oftmals aufgrund der häufigen Nutzung zu Materialermüdung, welche die Bedienelemente unbrauchbar machen.

DE 10 2011 014 234 A1 betrifft einen Rastschalter zur Vorgabe eines Sollwertes, umfassend mindestens eine Rastbahn mit mehreren Rasten, einen um eine Achse schwenkbaren Hebel und mindestens ein Rastelement.

WO 2020/074 684 A1 zeigt eine Bedieneinheit zur Vorgabe eines Sollwertes für eine Höheneinstellvorrichtung sowie einen Fahrzeugsitz.

US 566 2000 A betrifft ein drehbares Rastbetätigungssystem.

Aufgabe der vorliegenden Erfindung ist es einen Bedienelement bereitzustellen, welches die angeführten Nachteile überwindet. Weiterhin ist es Aufgabe der Erfindung einen Fahrzeugsitz mit einem Bedienelement bereitzustellen, welches die angeführten Nachteile überwindet.

Diese Aufgabe wird von einem Bedienelement mit den Merkmalen vom Anspruch 1 und weiterhin von einem Fahrzeugsitz mit den Merkmalen vom Anspruch 11 gelöst.

Durch die Bewegung des zweiten Elements relativ zu dem ersten Element wird demnach der Bowdenzug betätigt. Der Bowdenzug ist vorzugsweise mit einer entsprechenden Komponente des Fahrzeugsitzes oder einer entsprechenden Einrichtung des Fahrzeugsitzes verbunden. Durch den Bowdenzug kann die Bewegung des zweiten Elements, beziehungsweise die entsprechende Zug- oder Druckkraft an die Komponente oder Einrichtung übertragen werden. Der Insasse kann somit die Komponente oder Einrichtung manipulieren und den Fahrzeugsitz an seine Bedürfnisse anpassen. Durch die Verrastung des ersten Rastelements mit dem zweiten Rastelement, beziehungsweise des ersten Elements mit dem zweiten Element, kann das zweite Element arretiert, beziehungsweise an einer bestimmten Position festgelegt werden. Die zu dieser Position korrespondierende Einstellung der Komponente oder der Einrichtung kann demnach vorteilhafterweise ebenso festgelegt werden.

Nach einer ersten Variante sind das erste Element und das Federelement einteilig ausgebildet, das zweite Rastelement ist weiterhin an dem zweiten Element angeordnet. Das erfindungsgemäße Bedienelement hat den Vorteil, dass das erste Element einteilig mit dem Federelement ausgebildet ist. Das erste Element ist vorzugsweise aus einem einzigen einheitlichen Teil gefertigt. Es ist demnach äußerst einfach und kostengünstig herzustellen.

Vorzugsweise sind in der ersten Variante auch das zweite Element und das zweite Rastelement einteilig ausgebildet. Denkbar wäre auch eine einstückige Ausgestaltung des zweiten Elements und des zweiten Rastelements. Unter einer einstückigen Ausgestaltung ist zu verstehen, dass die Elemente zwar nicht aus einem einzigen einheitlichen Teil gefertigt sind, jedoch nicht nur fest, sondern so innig miteinander verbunden sind, dass sie nicht als mehrere aneinander gefügte Bauteile erscheinen und jedenfalls nicht mehr voneinander gelöst werden können.

Nach einer zweiten Variante sind das zweite Element und das Federelement einteilig ausgebildet, das zweite Rastelement ist weiterhin an dem ersten Element angeordnet. Das erfindungsgemäße Bedienelement hat auch hier den Vorteil, dass das zweite Element einteilig mit dem Federelement ausgebildet ist. Das zweite Element ist vorzugsweise aus einem einzigen einheitlichen Teil gefertigt. Es ist demnach äußerst einfach und kostengünstig herzustellen.

Vorzugsweise sind in der zweiten Variante auch das erste Element und das zweite Rastelement einteilig ausgebildet. Denkbar wäre auch eine einstückige Ausgestaltung des ersten Elements und des zweiten Rastelements. Unter einer einstückigen Ausgestaltung ist zu verstehen, dass die Elemente zwar nicht aus einem einzigen einheitlichen Teil gefertigt sind, jedoch nicht nur fest, sondern so innig miteinander verbunden sind, dass sie nicht als mehrere aneinander gefügte Bauteile erscheinen und jedenfalls nicht mehr voneinander gelöst werden können

Die grundlegende Funktion der Bedienung des Bowdenzugs kann demnach durch lediglich zwei Elemente erfolgen. Hierdurch ist eine erheblich einfache und kostengünstige Herstellung des Bedienelements möglich.

Nach einer bevorzugten Ausführungsform weist das erste Element einen plattenartigen Basisabschnitt auf, mittels welchem das erste Element an dem Fahrzeugsitz anordenbar ist. Dies kann beispielsweise über eine Schraubverbindung erfolgen. Denkbar wären jedoch auch weitere Verbindungen wie beispielsweise Schnappverbindungen, Nietenverbindungen oder ähnliche Verbindungen. An dem plattenartigen Basisabschnitt ist vorteilhafterweise eine Durchgangsöffnung für den Bowdenzug vorgesehen. Vorteilhafterweise kann demnach der Bowdenzug durch das erste Element zu dem zweiten Element geführt sein.

Nach einer weiteren bevorzugten Ausführungsform bestehen das erste Element und das Federelement aus einem Kunststoff. Vorzugsweise bestehen das erste Element und das Federelement aus dem gleichen Kunststoff. Bevorzugt sind das erste Element und das Federelement durch ein Spritzgussverfahren hergestellt. Die einteilige Ausgestaltung von erstem Element und Federelement kann durch die vorteilhafte Nutzung des Spritzgussverfahrens äußerst einfach erfolgen. Vorzugsweise ist der Kunststoff aus dem das erste Element und das Federelement hergestellt sind, ein für ein Spritzgussverfahren geeigneter Kunststoff. Vorteilhafterweise sind auch das zweite Element und das zweite Rastelement durch ein Spritzgussverfahren hergestellt. Bevorzugt bestehen dabei das zweite Element und das zweite Rastelement aus einem, vorzugweise gleichen, Kunststoff. Hierdurch wird vorteilhafterweise die einteilige Ausgestaltung nach der ersten Variante realisiert. Nach der zweiten Variante ist es von Vorteil, dass das zweite Element und das Federelement aus einem Kunststoff bestehen. Vorzugsweise bestehen das zweite Element und das Federelement aus dem gleichen Kunststoff. Bevorzugt sind das zweite Element und das Federelement durch ein Spritzgussverfahren hergestellt. Vorteilhafterweise sind auch das erste Element und das zweite Rastelement durch ein Spritzgussverfahren hergestellt. Bevorzugt bestehen dabei das erste Element und das zweite Rastelement aus einem, vorzugweise gleichen, Kunststoff.

Nach einer weiteren besonders bevorzugten Ausführungsform ist das Federelement eine gekrümmte Biegefeder und/oder Blattfeder. Vorzugsweise weist das Federelement zumindest zwei Krümmungsbögen auf. Vorteilhafterweise weist das Federelement zwei Krümmungsbögen auf. Bevorzugt weist das Federelement, beziehungsweise die gekrümmte Biegefeder und/oder Blattfeder einen S-förmigen Verlauf auf. Vorzugsweise kann jeder Teilabschnitt des Federelements, welcher einen Krümmungsbogen aufweist, als eine Teilfeder betrachtet werden. Vorzugsweise können diese Teilfedern als in Reihe geschaltet betrachtet werden. Eine resultierende Federkonstante, beziehungsweise die Federsteifigkeit (Kreis) für in Reihe geschaltete Teilfedern berechnet sich wie folgt:

$$\frac{1}{K_{res}} = \sum_{i=1}^{n} \frac{1}{K_i}$$

Demnach verringert sich die Federsteifigkeit bei in Reihe geschalteten Teilfedern. Die Arretierung des zweiten Elements relativ zu dem ersten Element, beziehungsweise die Verrastung des zweiten Elements mit dem ersten Element sollte vorteilhafterweise zwar ausreichend stabil sein, um äußeren mechanischen Belastungen standzuhalten, jedoch sollte sie von dem Insassen auch leicht wieder lösbar sein, um eine entsprechende Modifikation durchzuführen. Demnach ist es vorteilhaft, ein Federelement mit einer geringeren Federhärte vorzusehen. Dies kann beispielsweise durch eine Verringerung der Materialstärke erreicht werden. Eine solche Verringerung der Materialstärke wirkt sich jedoch negativ auf die Lebensdauer des Federelements aus. Durch die vorteilhafte Ausgestaltung des Federelements mit zumindest zwei Krümmungsbögen, beziehungsweise mit zwei Krümmungsbögen und einem S-förmigen Verlauf, kann die resultierende Federsteifigkeit herabgesetzt werden und gleichzeitig eine ausreichende Materialstärke des Federelements vorgesehen werden. Es werden somit bei dem Federelement Materialermüdung verhindert und eine ausreichende Stabilität gewährleistet. Das Federelement, beziehungsweise das Bedienelement hat somit eine größere Lebensdauer.

Es ist das zweite Element um eine Drehachse drehbar an dem ersten Element angeordnet. Es erstreckt sich die Drehachse entlang einer Breitenachse Y, und die Drehachse verläuft entlang einer Höhenachse Z unter dem ersten Rastelement. Vorzugsweise sind an dem ersten Element zwei Führungsvorsprünge angeordnet, welche jeweils in einer Aufnahme an dem zweiten Element angeordnet sind. Die Führungsvorsprünge erstrecken sich bevorzugt entlang der Breitenachse Y. Die Führungsvorsprünge sind vorzugsweise an gegenüberliegenden Seitenflächen des ersten Elements angeordnet und erstrecken sich somit in jeweils entgegengesehnter Richtung entlang der Breitenachse Y. Die Aufnahmen können dabei bevorzugt als Ausnehmungen oder Bohrungen ausgestaltet sein. Vorteilhafterweise sind die Führungsvorsprünge und die Aufnahmen derart bemessen, dass eine Drehung des zweiten Elements relativ zu dem ersten Element ermöglicht ist und das zweite Element an dem ersten Element verliersicher angeordnet, beziehungsweise befestigt ist. Vorzugsweise ist der Bowdenzug an dem zweiten Element derart befestigt, dass durch die Drehbewegung ein Innenzug des Bowdenzugs bewegt wird. Ein Bowdenzug umfasst vorteilhafterweise einen Innenzug, welcher in einer flexiblen, aber in Zugrichtung druckfesten Zughülle verläuft. Eine solche Zughülle dient der Führung des Innenzugs sowie als Gegenlager zur Abstützung der zu übertragenden Zugkräfte.

Nach einer weiteren bevorzugten Ausführungsform weist das erste Rastelement eine Mehrzahl an Rastnuten auf. Es weist das erste Rastelement eine entlang der Höhenachse Z konvexe Krümmung auf. Bevorzugt sind die Rastnuten durch Raststufen abgetrennt.

Nach einer weiteren bevorzugten Ausführungsform weist das zweite Rastelement zumindest einen Rastnocken auf. Bevorzugt weist das zweite Rastelement zumindest zwei Rastnocken auf. Weiter bevorzugt weist das zweite Rastelement zumindest drei Rastnocken auf. Vorzugsweise greift der zumindest eine Rastnocken in eine Rastnut, beziehungsweise in eine erste Teilmenge von Rastnuten ein. Durch das vorteilhafte Anliegen des zweiten Elements an dem ersten Element wird das Federelement komprimiert, so dass eine gewisse Vorspannung zwischen dem ersten Element und dem zweiten Element, beziehungsweise zwischen dem ersten Rastelement und dem zweiten Rastelement, beziehungsweise zwischen dem zumindest einem Rastnocken und einer Teilmenge an Rastnuten vorherrscht. Durch die Federkraft des Federelements wird somit das erste Rastelement gegen das zweite Rastelement gedrückt. Der zumindest eine Rastnocken verläuft vorzugsweise entlang der Breitenachse (Y). Weiterhin ist es von Vorteil, wenn der zumindest eine Rastnocken sich parallel zu den Rastnuten erstreckt.

Vorteilhafterweise ist durch eine Drehbewegung des zweiten Elements um die Drehachse der Eingriff des zumindest einen Rastnocken aus der ersten Teilmenge von Rastnuten lösbar und zu einer zweiten Teilmenge an Rastnuten verlagerbar. Bei einer solchen vorteilhaften Drehbewegung wird eine ausreichende Verstellkraft aufgewendet, dass der zumindest eine Rastnocken aus der ersten Teilmenge an Rastnuten über den, beziehungsweise die entsprechenden Raststufen gleiten kann. Es wird demnach vorteilhafterweise eine Kompression des Federelements verursacht, wodurch die das erste Rastelement entlang der Höhenachse Z nach unten verlagert wird. Die notwendige Verstellkraft wird demnach vorzugsweise definiert durch die Vorspannung zwischen dem ersten Rastelement und dem zweiten Rastelement und der Höhe der Raststufen. Durch die vorteilhafte Ausgestaltung des Federelements mit zumindest zwei, beziehungsweise zwei Krümmungsbögen wird gewährleistet, dass bei der Komprimierung des Federelements ein Verkippung entlang der Breitenachse (Y) des ersten Rastelements verhindert wird. Eine solche vorteilhafte Kompression des Federelements findet vorteilhafterweise sowohl in der ersten Variante als auch in der zweiten Variante statt.

Nach einer bevorzugten Ausführungsform sind sowohl in einer Eingriffsposition als auch in einer gelösten Position das erste Rastelement und das zweite Rastelement entlang der Breitenachse (Y) parallel ausgerichtet. Vorteilhafterweise weist das zweite Rastelement eine Breiteausdehnung entlang der Breitenachse Y auf. Bevorzugt liegt durch die parallele Ausrichtung der beiden Rastelemente in einer Eingriffsposition das zweite Rastelement entlang seiner gesamten Breiteausdehnung an dem ersten Rastelement an. Vorzugsweise sind sowohl in einer Eingriffsposition als auch in einer gelösten Position der zumindest eine Rastnocken und die erste Teilmenge von Rastnuten entlang der Breitenachse (Y) parallel ausgerichtet. Bevorzugt liegt durch die parallele Ausrichtung des Rastnockens und der ersten Teilmenge von Rastnuten der zumindest eine Rastnocken in einer Eingriffsposition entlang seiner gesamten Breitenausdehnung an der ersten Teilmenge von Rastnuten an. Vorteilhafterweise wird die parallele Ausrichtung der Rastelemente sowohl in einer Eingriffsposition als auch in einer gelösten Position durch die vorteilhafte Ausgestaltung des Federelements mit zumindest zwei Krümmungsbögen, vorzugsweise zwei Krümmungsbögen und einen entsprechenden S-förmigen Verlauf des Federelements begründet. Durch eine derartige Form des Federelements kann ein Andrücken des ersten Rastelements entlang seiner gesamten Breitenausdehnung an das zweite Rastelement gewährleistet werden. Bei einer entsprechenden vorteilhaften Komprimierung des Federelements wird das erste Rastelement nicht relativ zu dem zweiten Rastelement verkippt. Bei einer herkömmlichen Feder mit nur einem Krümmungsbogen würde bei Überspringen der einzelnen Raststufen und der einhergehenden Komprimierung des Federelements eine Verkippung des ersten Rastelements erfolgen. Hierbei würden die beiden Rastelemente nicht mehr über deren volle Breite aneinander anliegen. Dies würde eine einseitige Abnutzung der Rastelemente verursachen.

Vorzugsweise ist durch die Höhe der Raststufen haptisches und/oder akustisches Feedback vorgebbar. Vergleichsweise hohe Raststufen verursachen eine größere Kompression des Federelements, beziehungsweise eine größere Verlagerung des ersten Rastelements entlang der Höhenachse (Z). Das Gleiten des zumindest einen Rastnocken über höhere Raststufen kann vorteilhafterweise akustisch, beispielsweise als lautes Knacken wahrgenommen werden. Ein entsprechendes haptisches Empfinden beim Weitergleiten des Rastnockens ist demnach vorteilhafterweise ebenso gegeben. Bei geringerer Höhe der Raststufen ist ein akustisches, beziehungsweise haptisches Feedback entsprechend weniger ausgeprägt.

Durch die beschriebene vorteilhafte entlang der Breitenachse (Y) parallele Ausrichtung des ersten Rastelements und des zweite Rastelements wird das haptische und/oder akustische Feedback deutlich verstärkt. Dies begründet sich darin, dass die Anlagefläche entlang der Breitenrichtung (Y9 vergrößert ist.

Denkbar wäre es hierbei, dass die Raststufen unterschiedliche Höhen aufweisen, und somit verschiedene Rastpositionen für den Nutzer kenntlich machen. So kann ein vorteilhafter Verlagerungsweg des zweiten Rastelements entlang des ersten Rastelements, beispielsweise in diskrete Bereiche aufgeteilt werden, welche durch erhöhte Raststufen kenntlich gemacht werden. Möglich wäre auch, dass ein vorbestimmter Endabschnitt des Verlagerungswegs durch erhöhte Raststufen kenntlich gemacht wird.

Nach einer weiteren bevorzugten Ausführungsform umfasst das zweite Element einen kappenartigen Abschnitt, welcher zumindest abschnittsweise das erste Rastelement und das Federelement umschließt. Vorzugsweise ist das zweite Rastelement zumindest abschnittsweise an einer inneren Oberfläche des kappenartigen Abschnitts angeordnet. Vorzugsweise ist an dem kappenartigen Abschnitt zumindest eine Grifffläche bevorzugt mehrerer Griffflächen vorgesehen. Bei einer derartigen vorteilhaften Ausgestaltung besteht das Bedienelement aus lediglich zwei Elementen.

Der Nutzer kann vorteilhafterweise an dieser zumindest einen Grifffläche das zweite Element greifen und dieses entsprechend bewegen. Die Form der Griffflächen kann derart ausgestaltet werden, dass der Nutzer die erforderliche Kraft bequem anbringen kann. Die Form der Griffflächen kann dabei abhängig von der Position des Bedienelements an dem Fahrzeugsitz gestaltet werden. Abhängig von der Position des Bedienelements an dem Fahrzeugsitz ändert sich auch die gewöhnliche Griffrichtung des Insassen zu dem Bedienelement.

Vorteilhafterweise sind an der zumindest einen Grifffläche des kappenartigen Abschnitts haptische Beschichtungen und/oder Schutzbeschichtungen aufgebracht. Derartige Beschichtungen können strukturierte Beschichtungen sein, welche das haptische Erlebnis beeinflussen. Durch derartige Beschichtungen kann die zumindest eine Grifffläche des kappenartigen Abschnitts unempfindlich gegenüber mechanischen Belastungen, wie Stößen oder Hitze, Säuren etc. gestaltet werden. Die zumindest eine Grifffläche des kappenartigen Abschnitts kann einen textilen Charakter, eine weiche Lederstruktur aufweisen. Die zumindest eine Grifffläche des kappenartigen Abschnitts kann auch samtartig, matt, weich oder mit einer Perlstruktur erscheinen. An der zumindest einen Grifffläche des kappenartigen Abschnitts können vorzugsweise weitere haptische Elemente wie Gripp-Beläge, Gummierungen und Ähnliches angeordnet sein. Die zumindest eine Grifffläche des kappenartigen Abschnitts kann auch verschiedene Farben aufweisen. Ferner können bevorzugt Identifikationselemente an der zumindest einen Grifffläche des kappenartigen Abschnitts vorgesehen sein. Derartige Identifikationselemente können tastbare Elemente oder Symbole oder visuelle Symbole sein, welche auf die Funktion des Bedienelements hinweisen. Weiterhin wäre es möglich das an der zumindest einen Grifffläche des kappenartigen Abschnitts lumineszierende oder leuchtende Elemente angeordnet sind, welche die Auffindbarkeit des Bedienelements verbessern oder einen Hinweis auf die Funktion des Bedienelements liefern.

Nach einer weiteren bevorzugten Ausführungsform ist auf dem zweiten Element eine Griffkappe anordenbar. Vorzugsweise umfasst das zweite Element einen sich von der Drehachse aus erstreckendem Hebelarm. Bevorzugt ist die Griffkappe an dem Hebelarm anordenbar. Vorzugsweise ist an der Griffkappe zumindest eine Grifffläche vorgesehen. Eine derartig vorteilhafte Ausführungsform besteht aus lediglich drei Elementen, wobei für die Funktion des Bedienelements lediglich das erste und das zweite Element notwendig sind. Die Griffkappe dient vorteilhafterweise für die spezielle kundenspezifische Ausgestaltung des Erscheinungsbildes des Bedienelements, beziehungsweise dessen Griffflächen. In der Herstellung können vorteilhafterweise das erste und das zweite Element für jede Ausführungsform gleich hergestellt werden. Abhängig von dem den jeweiligen Zweck, beziehungsweise dem Kundenwunsch kann das zweite Element mit einer speziell ausgestalteten Griffkappe bestückt zu werden.

Der Nutzer kann vorteilhafterweise die zumindest eine Grifffläche der Griffkappe greifen und das zweite Element bewegen. Die Form der Griffflächen kann derart ausgestaltet werden, dass der Nutzer die erforderliche Kraft bequem anbringen kann. Die Form der Griffflächen kann dabei abhängig von der Position des Bedienelements an dem Fahrzeugsitz gestaltet werden. Abhängig von der Position des Bedienelements an dem Fahrzeugsitz ändert sich auch die gewöhnliche Griffrichtung des Insassen zu dem Bedienelement.

Vorteilhafterweise sind an der zumindest einen Grifffläche der Griffkappe haptische Beschichtungen und/oder Schutzbeschichtungen aufgebracht. Derartige Beschichtungen können strukturierte Beschichtungen sein, welche das haptische Erlebnis beeinflussen. Durch derartige Beschichtungen kann die zumindest eine Grifffläche der Griffkappe unempfindlich gegenüber mechanischen Belastungen, wie Stößen oder Hitze, Säuren etc. gestaltet werden. Die zumindest eine Grifffläche der Griffkappe kann einen textilen Charakter, eine weiche Lederstruktur aufweisen. Die zumindest eine Grifffläche der Griffkappe kann auch samtartig, matt, weich oder mit einer Perlstruktur erscheinen. An der zumindest einen Grifffläche der Griffkappe können vorzugsweise weitere haptische Elemente wie Gripp-Beläge, Gummierungen und Ähnliches angeordnet sein. Die zumindest eine Grifffläche der Griffkappe kann auch verschiedene Farben aufweisen. Ferner können bevorzugt Identifikationselemente an der zumindest einen Grifffläche der Griffkappe vorgesehen sein. Derartige Identifikationselemente können tastbare Elemente oder Symbole oder visuelle Symbole sein, welche auf die Funktion des Bedienelementes hinweisen. Weiterhin wäre es möglich, dass an der zumindest einen Grifffläche der Griffkappe lumineszierende oder leuchtende Elemente angeordnet sind, welche die Auffindbarkeit des Bedienelements verbessern oder einen Hinweis auf die Funktion des Bedienelementes liefern.

Die Aufgabe wird weiterhin gelöst von einem Fahrzeugsitz, umfassend ein Bedienelement, nach einem der vorhergehend beschriebenen Ausführungsformen.

Der Fahrzeugsitz kann dabei mit allen bereits obig im Rahmen des Bedienelements beschriebenen Merkmalen einzeln oder in Kombination miteinander ausgestattet sein und umgekehrt.

Es handelt sich um einen Fahrzeugsitz mit einem Bedienelement umfassend ein zweites Element, welches relativ zu einem ersten Element beweglich angeordnet ist, wobei das zweite Element mit einem Bowdenzug verbunden ist und relativ zu dem ersten Element arretierbar ist, wobei das Bedienelement ein Federelement umfasst, an welchem ein erstes Rastelement vorgesehen ist, wobei durch die Federkraft des Federelements das erste Rastelement gegen ein zweites Rastelement drückt, wodurch das erste Rastelement und das zweite Rastelement verrasten, wobei das zweite Element und das Federelement einteilig ausgebildet sind und das zweite Rastelement an dem ersten Element angeordnet ist, wobei das zweite Element um eine Drehachse drehbar an dem ersten Element angeordnet ist, wobei die Drehachse sich entlang einer Breitenachse erstreckt und entlang einer Höhenachse unter dem ersten Rastelement verläuft, wobei das erste Rastelement eine entlang der Höhenachse konvexe Krümmung aufweist.

Vorzugsweise umfasst der Fahrzeugsitz Komponenten und/oder Einrichtungen auf, welche mit dem Bedienelement bedienbar sind. Vorzugsweise sind durch derartige Komponenten und/oder Einrichtungen Sitzparameter modifizierbar. Derartige Sitzparameter sind beispielsweise die Neigung der Rückenlehne oder die Sitzhöhe, die Dämpferhärte und/oder die Federhärte einer Feder- und/oder Dämpfungseinrichtung für vertikale und/oder horizontale Schwingungen.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:

Fig.1        isometrische Ansicht eines Bedienelements nach einer Ausführungsform;

Fig.2        Rückansicht eines Bedienelements nach einer Ausführungsform;

Fig.3a, 3b   isometrische Ansicht eines Bedienelements nach einer Ausführungsform in verschiedenen Stellungen;

Fig.4a       Rückansicht des zweiten Elements nach einer Ausführungsform;

Fig.4b       Vorderansicht des zweiten Elements nach einer Ausführungsform;

Fig.5a       seitliche isometrische Ansicht des ersten Elements nach einer Ausführungsform;

Fig.5b       Seitenansicht des ersten Elements nach einer Ausführungsform;

Fig.6a       Seitenansicht des ersten Elements nach einer Ausführungsform;

Fig.6b       seitliche isometrische Ansicht des ersten Elements nach einer Ausführungsform;

Fig.7        Draufsicht des ersten Elements nach einer Ausführungsform;

Fig.8        Schnittansicht entlang der Schnittachse A-A aus Figur 7

Fig.9        Draufsicht des Bedienelements nach einer Ausführungsform;

Fig.10a bis 10c   Schnittansichten entlang der Schnittachse B-B aus Figur 9

Fig.11       isometrische Ansicht eines Bedienelements nach einer Ausführungsform;

Fig.12       Explosionsdarstellung eines Bedienelements nach einer Ausführungsform;

Fig.13       Seitenansicht des Bedienelements nach einer Ausführungsform;

Fig. 14      Draufsicht des Bedienelements nach einer Ausführungsform;

Fig.15a bis 15c   Schnittansichten entlang der Schnittachse E-E aus Figur 16;

Fig. 16      Seitenansicht eines Fahrzeugsitzes mit einem Bedienelement nach einer Ausführungsform.

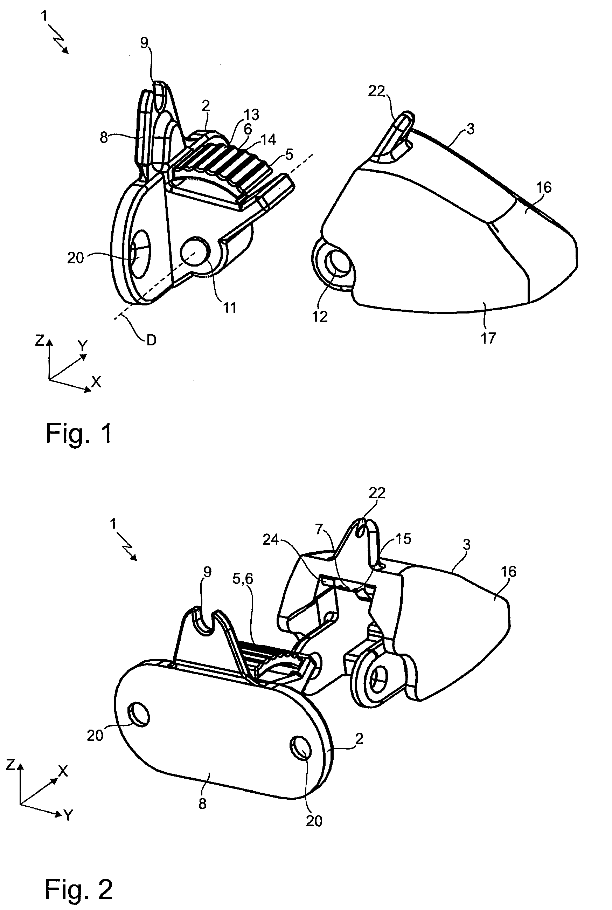

In den Figuren 1 bis 15c ist ein Bedienelement 1 dargestellt, insbesondere für einen Fahrzeugsitz 100, umfassend ein zweites Element 3, welches relativ zu einem ersten Element 2 beweglich angeordnet ist, wobei das zweite Element 3 mit einem Bowdenzug 4 verbunden ist und relativ zu dem ersten Element 2 arretierbar ist, wobei das Bedienelement 1 ein Federelement 5 umfasst, an welchem ein erstes Rastelement 6 vorgesehen ist, wobei durch die Federkraft des Federelements 5 das erste Rastelement 6 gegen ein zweites Rastelement 7 drückt, wodurch das erste Rastelement 6 und das zweite Rastelement 7 verrasten, wobei das erste Element 2 und das Federelement 5 einteilig ausgebildet sind und das zweite Rastelement 7 an dem zweiten Element 3 angeordnet ist oder das zweite Element 3 und das Federelement 5 einteilig ausgebildet sind und das zweite Rastelement 7 an dem ersten Element 2 angeordnet ist.

Das Bedienelement 1 erstreckt sich entlang einer Höhenachse Z einer Längsachse X und einer Breitenachse Y.

Nach einer ersten Variante sind das erste Element 2 und das Federelement 5 mit dem ersten Rastelement 6 einteilig ausgebildet und das zweite Rastelement 7 ist weiterhin an dem zweiten Element 3 angeordnet. Dabei können auch das zweite Element 3, das zweite Rastelement 7, einteilig oder einstückig ausgebildet sein. Das erste Element 2 und das Federelement 5 können aus einem, vorzugsweise einem gleichen Kunststoff mittels eines Spritzgussverfahrens hergestellt sein. Ebenso können vorteilhafterweise das zweite Element 3 und das zweite Rastelement 7 aus einem, vorzugsweise einem gleichen Kunststoff mittels eines Spritzgussverfahrens hergestellt sein.

Nach einer zweiten Variante sind das zweite Element 3 und das Federelement 5 mit dem ersten Rastelement 6 einteilig ausgebildet. Das zweite Rastelement 7 ist weiterhin an dem ersten Element 2 angeordnet. Dabei können auch das erste Element 2, das zweite Rastelement 7, einteilig oder einstückig ausgebildet sein. Das zweite Element 3 und das das Federelement 5 mit dem ersten Rastelement 6 können aus einem, vorzugsweise einem gleichen, Kunststoff mittels eines Spritzgussverfahrens hergestellt sein. Ebenso können vorteilhafterweise das erste Element 2 und das zweite Rastelement 7 aus einem, vorzugsweise einem gleichen, Kunststoff mittels eines Spritzgussverfahrens hergestellt sein.

In den Figuren 1 bis 16 ist die erste Variante dargestellt. Die Funktionsweise der zweiten Variante ist jedoch analog zu der ersten Variante zu verstehen.

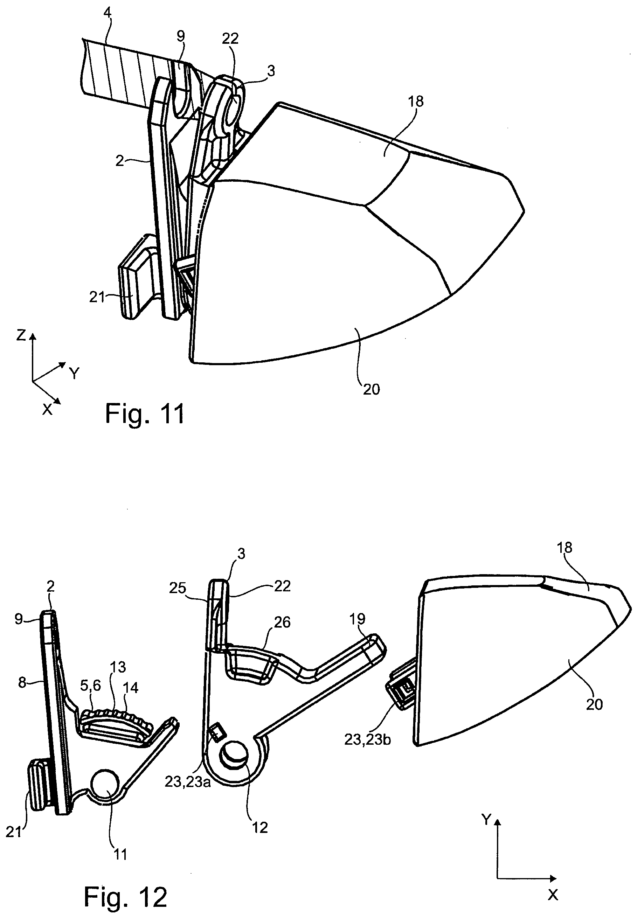

Das erste Element 2 weist einen plattenartigen Basisabschnitt 8 auf, mittels welchem das erste Element 2 an dem Fahrzeugsitz 100 anordenbar ist. Dies kann auf verschieden Art und Weise erfolgen. Die Ausführungsformen nach Figur 1 bis 10c weisen hierzu Bohrungen 20 auf. Nach den Ausführungsformen gemäß den Figuren 11 bis 15c ist ein hakenartiges Element 21 vorgesehen, welches an entsprechenden Vorrichtungen an dem Fahrzeugsitz 100 eingreifen kann.

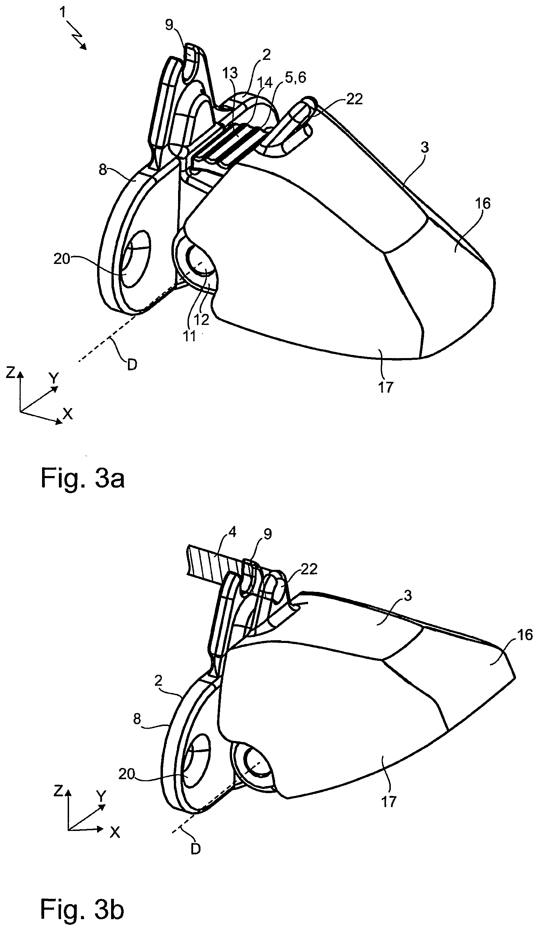

An dem plattenartigen Basisabschnitt 8 ist eine Durchgangsöffnung 9 für den Bowdenzug 4 vorgesehen. An dem zweiten Element 3 ist eine Aufnahme 22 vorgesehen, an welchen der Bowdenzug 4, insbesondere der Innenzug des Bowdenzugs befestigt werden kann. Die Zughülle des Bowdenzugs kann vorteilhafterweise in der Durchgangsöffnung 9 befestigt werden, so dass eine Relativbewegung des zweiten Elements 3 zu dem ersten Element 2 zu einer Relativbewegung des Innenzugs zu der Zughülle resultiert. Die Zughülle kann jedoch auch anderweitig an dem Fahrzeugsitz festgelegt werden. Der Bowdenzug 4 ist dabei lediglich in den Figuren 3b und 11 angedeutet, in den weiteren Figuren ist dieser aus Übersichtlichkeitsgründen nicht dargestellt.

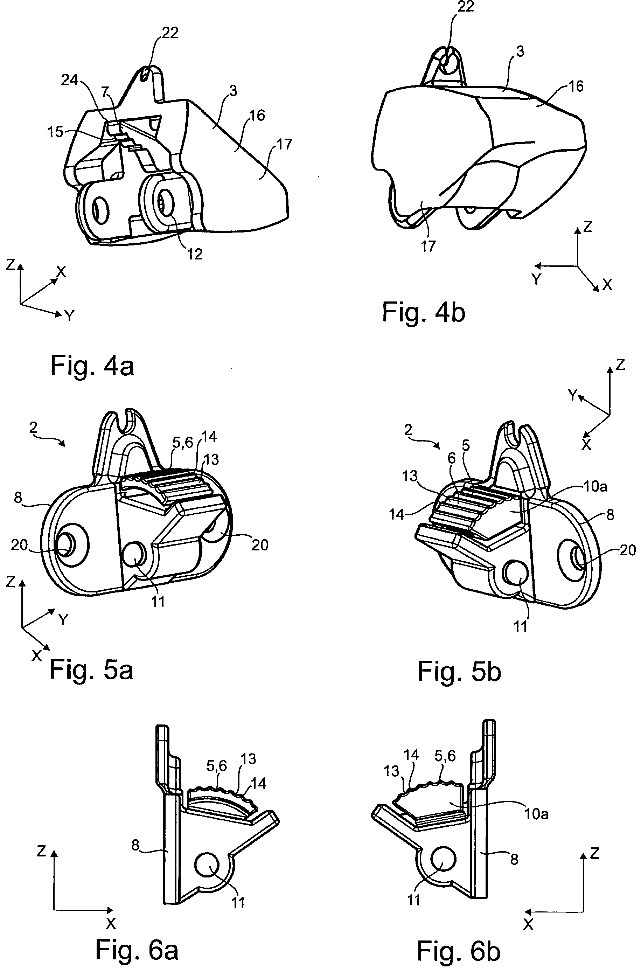

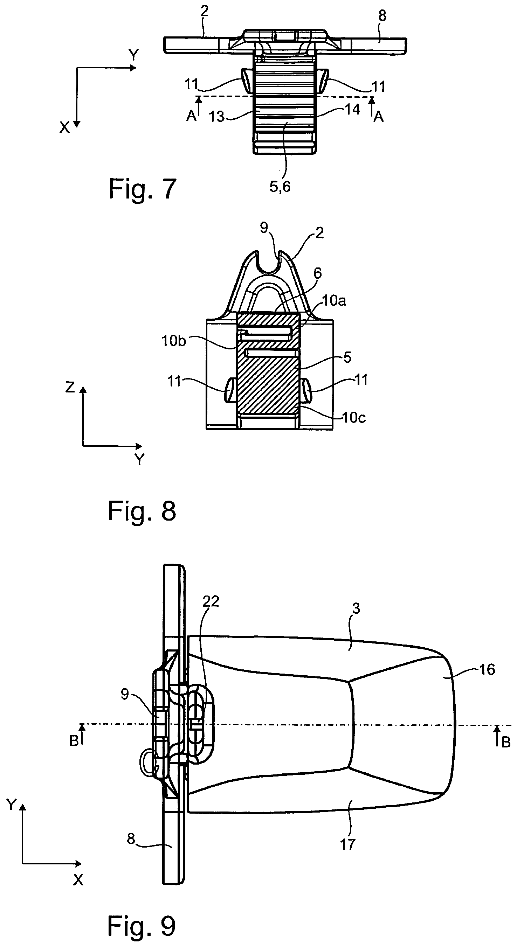

Das Federelement 5 ist eine gekrümmte Blattfeder, welche zwei Krümmungsbögen 10a, 10b und einen S-förmigen Verlauf aufweist. Denkbar wären natürlich auch Ausführungsformen mit mehr als zwei Krümmungsbögen 10a, 10b. Der S-förmige Verlauf des Federelements 5 ist in Figur 8 gut erkenntlich. Das Federelement 5 umfasst einen unteren Abschnitt 10c, an welchem entlang der Höhenrichtung Z ein unterer Krümmungsbogen 10b anschließt. An diesem Krümmungsbogen 10b schließt ein Arm 10d an, welcher sich entlang der Breitenachse Y erstreckt. Der Arm 10d geht über in den oberen Krümmungsbogen 10a, welcher wiederum in das erste Rastelement 6 übergeht. Der obere Krümmungsbogen 10a ist ebenso in den Figuren 5b und 6b ersichtlich. Das Federelement 5 kann demnach als Reihenschaltung von Teilfedern betrachtet werden. Dabei ist die reziprok resultierende Federsteifigkeit die Summe der reziproken Federsteifigkeiten der Teilfedern. Die Materialstärke der Blattfeder, beziehungsweise die Höhe der Blattfeder und die Art des Materials, beziehungsweise Kunststoffs geben die jeweiligen Federsteifigkeiten der Teilfedern an. Durch die Reihenschaltung der Teilfedern kann die resultierende Federsteifigkeit herabgesetzt werden, ohne dass die Materialstärke verringert werden muss. Dies hat zum Vorteil, dass das Federelement langlebiger ist, das die Wahrscheinlichkeit von Materialermüdung reduziert ist.

Das zweite Element 3 ist um eine Drehachse (D) drehbar an dem ersten Element 2 angeordnet. Die Drehachse D erstreckt sich entlang der Breitenachse Y. Ferner verläuft die Drehachse D entlang einer Höhenachse Z unterhalb des ersten Rastelementes 6. Dabei sind an dem ersten Element 2 zwei Führungsvorsprünge 11 angeordnet, welche an gegenüberliegenden Seitenflächen des ersten Elements angeordnet sind und sich somit in jeweils entgegengesehnter Richtung entlang der Breitenachse Y erstrecken. Diese Führungsvorsprünge 11 sind jeweils in einer Aufnahme 12 an dem zweiten Element 3 derart angeordnet, dass das zweite Element 6 relativ zu dem ersten Element 2 drehbar ist. Ferner ist das zweite Element 3 derart an dem ersten Element 2 angeordnet, dass durch das Federelement 5 komprimiert ist. Hierdurch drücken das erste Rastelement 5 und das zweite Rastelement 6 aufgrund der Federkraft des Federelements 5 gegeneinander und sind somit vorgespannt.

Das erste Rastelement 6 weist eine Mehrzahl an Rastnuten 13 auf. Dabei sind die Rastnuten 6 durch Raststufen 14 abgetrennt. Ferner weist das erste Rastelement 6 eine entlang der Höhenachse Z konvexe Krümmung auf, wobei die Rastnuten 6 durch Raststufen 14 abgetrennt sind. Das zweite Rastelement 7 ist demnach derart an dem zweiten Element 3 angeordnet, dass es sich zu dem ersten Rastelement 5 hin erstreckt. Das zweite Rastelement 7 ist vorteilhafterweise einteilig mit dem zweiten Element 3 ausgestaltet. Denkbar wäre auch eine einstückige Ausgestaltung. Das zweite Rastelement 7 umfasst dabei zumindest einen Rastnocken 15.

In die Rastnuten 6, beziehungsweise in eine Teilmenge der Rastnuten 6 greift zumindest ein Rastnocken 15 ein, aufgrund der erwähnten Vorspannung. Durch die Drehbewegung des zweiten Elements 3 relativ zu dem ersten Element 2 wird eine Kraft aufgebracht, welche ein Gleiten des zumindest einen Rastnockens 15 über die entsprechende Raststufe 14, beziehungsweise über weitere folgende Raststufen 14 verursacht. Der Eingriff des zumindest einen Rastnockens 15 in eine erste Teilmenge an Rastnuten 13, ist demnach durch die Drehbewegung lösbar. Nach der vollzogenen Drehbewegung ist der zumindest eine Rastnocken 15 zu einer weiteren Teilmenge der Rastnuten 13 verlagert und greift nun in diese ein. Die Höhe der Raststufen 14 kann derart vorgesehen sein, dass ein haptisches und/oder akustisches Feedback vorgebbar ist. Die einzelnen Raststufen 14 des ersten Rastelements 2 können auch unterschiedliche Höhen aufweisen, um bestimmte Bereiche des Verlagerungswegs entlang des ersten Rastelements 2 für den Nutzer kenntlich zu machen.

Durch die Drehbewegung wird der Innenzug des Bowdenzugs 4 bewegt. Diese Bewegung, beziehungsweise Kraft kann dann eine entsprechende Komponente oder Einrichtung des Fahrzeugsitzes 100 bedienen, wodurch die entsprechenden Sitzparameter einstellbar sind.

Sowohl in einer Eingriffsposition als auch in einer gelösten Position sind das erste Rastelement 5 und das zweite Rastelement 6 entlang der Breitenachse Y parallel ausgerichtet. Demnach sind auch der zumindest eine Rastnocken 15 und die erste Teilmenge von Rastnuten 13 sowohl in einer Eingriffsposition als auch in einer gelösten Position entlang der Breitenachse Y parallel ausgerichtet. Durch die parallele Ausrichtung der beiden Rastelemente 5, 6 liegt in einer Eingriffsposition das zweite Rastelement 6 entlang seiner gesamten Breiteausdehnung an dem ersten Rastelement 5 an.

Die parallele Ausrichtung der Rastelemente 5, 6 sowohl in einer Eingriffsposition als auch in einer gelösten Position wird durch die vorteilhafte Ausgestaltung des Federelements 5 mit zumindest zwei Krümmungsbögen, vorzugsweise zwei Krümmungsbögen und einen entsprechenden S-förmigen Verlauf des Federelements 5 begründet. Durch eine derartige Form des Federelements 5 kann ein Andrücken des ersten Rastelements 5 entlang seiner gesamten Breitenausdehnung an das zweite Rastelement 6 gewährleistet werden. Bei einer entsprechenden vorteilhaften Komprimierung des Federelements 5 wird das erste Rastelement 5 nicht relativ zu dem zweiten Rastelement 6 verkippt.

In den Figuren sind zwei grundlegende Ausführungsformen dargestellt. In den Figuren 1 bis 3 und 9 bis 10c ist eine Ausführungsform dargestellt, in welcher das zweite Element 3 einen kappenartigen Abschnitt 16 umfasst, welcher zumindest abschnittsweise das erste Rastelement 6 und das Federelement 5 umschließt. An diesem kappenartigen Abschnitt 16 sind Griffflächen 17 vorgesehen, an welchen der Nutzer das Bedienelement 1 greifen kann und eine entsprechende Bewegung des zweiten Elements 3 durchführen kann. In der Figur 1 ist eine Explosionsdarstellung dieser Ausführungsform gezeigt. Die Figur 2 zeigt eine Rückansicht dieser Ausführungsform. In Figur 3a ist das Bedienelement mit einer unteren Stellung gezeigt. Die Aufnahme 22 ist hier um einen maximalen Abstand von dem ersten Element 2, beziehungsweise der Durchgangsöffnung 9 entfernt. Der Innenzug des Bodenzugs 4 ist somit ebenso um einen maximalen Weg relativ zu Zughülle (heraus) bewegt. In der Figur 3b ist eine obere Stellung des Bedienelements 1 dargestellt. Hier ist der Abstand zwischen der Aufnahme 22 und dem ersten Element 2 minimal.

In den Figuren 4a und 4b ist das zweite Element 3 dargestellt. Dabei ist ersichtlich, dass das zweite Rastelement 7 als ein Armelement 24 ausgestaltet ist, an dessen Unterseite eine Mehrzahl an Rastnocken angeordnet ist. Vorteilhafterweise ist das Armelement 24 bogenförmig ausgestaltet. Das Armelement 24 kann zumindest teilweise aus dem kappenartigen Abschnitt herausragen.

Die Ausführungsform nach den Figuren 1 bis 3 und 9 bis 10c hat den Vorteil, dass lediglich zwei Bauteile für das gesamte Bedienelement 1 vorgesehen ist.

In den Figuren 11 bis 14 ist eine Griffkappe 18 vorgesehen, welche an dem zweiten Element 3 angeordnet ist. An der Griffkappe 18 sind Griffflächen 20 vorgesehen, an welchen der Nutzer das Bedienelement 1 greifen kann und eine entsprechende Bewegung des zweiten Elements 3 durchführen kann. Bei beiden Ausführungsformen ist das erste Element 2, gezeigt beispielsweise in den Figuren 5a bis 7, im Wesentlichen gleich. Der Vorteil dieser Ausführungsform ist, dass das Erscheinungsbild des Bedienelements 1, welches im Wesentlichen durch die Griffflächen definiert wird kundenspezifisch angepasst werden kann. Die für die Funktion relevanten Bauelemente, in Form von dem ersten Element 2 und dem zweiten Element 3, können jedoch im Wesentlichen gleich hergestellt werden.

Die Griffflächen 17 der Ausführungsform nach den Figuren 1 bis 3 und 9 bis 10c und die Griffflächen 20 der Ausführungsform nach den Figuren 11 bis 14 können haptische Beschichtungen und/oder Schutzbeschichtungen aufweisen An den Griffflächen 17, 20 können haptische Elemente und/oder Identifikationselemente angeordnet sein. Ferner können an den Griffflächen 17, 20 lumineszierende oder leuchtende Elemente vorgesehen sein.

In den Figuren 11 bis 14 ist ein Hebelarm 19 vorgesehen, auf welchem die Griffkappe 18 angeordnet ist. Weiterhin ist eine Schnappverbindung 23 vorgesehen, welche zumindest einen Vorsprung 23a, bevorzugt zwei Vorsprünge 23a umfasst. Die beiden Vorsprünge 23a sind an den entlang der Breitenrichtung Y entgegengesetzten lateralen Seiten des zweiten Elements 3 vorgesehen. Der Vorsprung 23a greift in eine Öffnung 23b eines Arms an der Griffkappe 18.

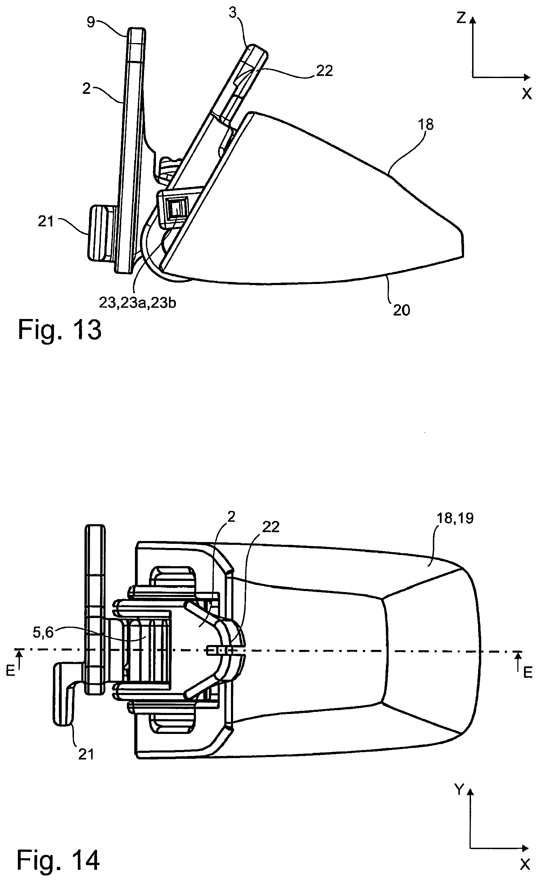

In der Figur 11 ist eine obere Stellung des Bedienelements 1 dargestellt. Hier ist der Abstand zwischen der Aufnahme 22 und dem ersten Element 2 minimal. In der Figur 13 ist das Bedienelement 1 in einer unteren Stellung gezeigt. Die Aufnahme 22 ist hier um einen maximalen Abstand von dem ersten Element 2, beziehungsweise der Durchgangsöffnung 9 entfernt. Der Innenzug des Bodenzugs 4 ist somit ebenso um einen maximalen Weg relativ zu Zughülle (heraus) bewegt.

In Figur 12 ist eine Explosionsdarstellung des Bedienelements 1 gezeigt. Dabei ist ersichtlich, dass das zweite Element 3 V-artig ausgestaltet ist. An dem entlang der Höhenachse Z unteren Ende sind zwei Arme mit den Aufnahmen 12 vorgesehen. An dem entlang der Höhenachse Z oberen Ende sind der Hebelarm 19 und ein Arm 25, an welchem die Aufnahme 22 für den Bowdenzug angeordnet ist, vorgesehen. Der Arm 25 und der Hebelarm 19 münden in einem Basisabschnitt 26. Dieser Basisabschnitt 26 ist zumindest abschnittsweise entlang der Höhenachse Z über dem ersten Rastelement 5 angeordnet. Das zweite Rastelement 7 ist an einer Unterseite des Basisabschnitts 26 angeordnet und erstreckt sich zu dem ersten Rastelement 2 hin.

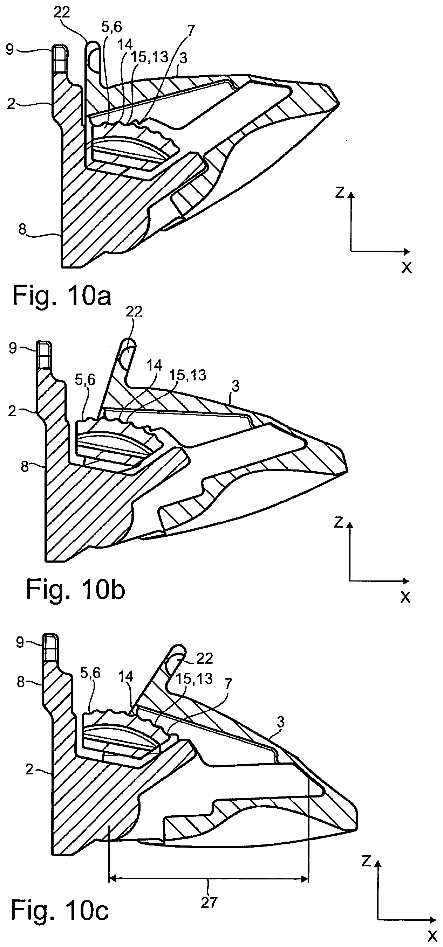

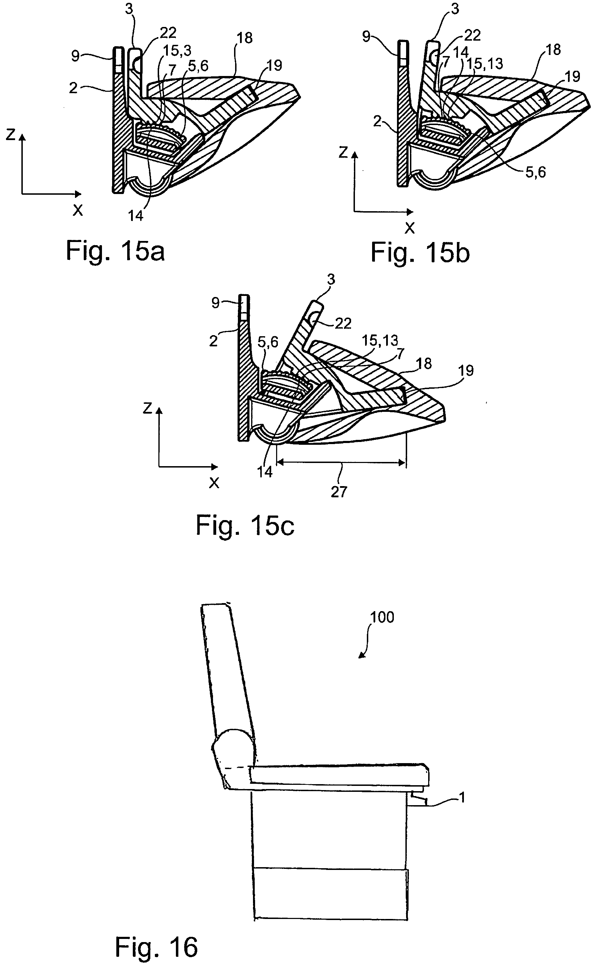

Der Hebelarm 19 ist ein Teil einer Hebellange 27, welche von der Drehachse D ausgeht. Dies ist in Figur 15c ersichtlich. Auch wenn bei der Ausführungsform nach den Figuren 1 bis 3 und 9 bis 10c kein expliziter Hebelarm 19 vorgesehen ist, ist durch die Ausgestaltung des kappenartigen Abschnitts 16 eine im Wesentlichen gleiche Hebellänge 27 realisierbar. Dies ist in Figur 10c ersichtlich. Durch die Hebellänge 27 kann die durch den Nutzer aufzuwendende Kraft festgelegt werden, welche notwendig ist, um den Eingriff der Rastnocken 15 aus den Rastnuten zu lösen, beziehungsweise die Verrastung zwischen dem ersten Rastelement 6 und dem zweiten Rastelement 7 zu lösen. Die Verstellkraft wird weiterhin durch die Höhe der Raststufen 14 und die Vorspannung beeinflusst.

In den Figuren 10a bis 10c ist ein Schnitt entlang der Achse B-B auf Figur 9 dargestellt. In den Figuren 15a bis 15c ist ein Schnitt entlang der Achse E-E aus Figur 14 dargestellt. In diesen Schnittdarstellungen ist das jeweilige Bedienelement in verschiedenen Stellungen dargestellt. Die Figuren 10a bis 10c und 15a bis 15c sind im Folgenden parallel beschrieben, da die entsprechenden Anordnungen analog sind.

Es sind jeweils 3 Rastnocken 15 vorgesehen, welche in jeweils 3 Rastnuten eingreifen. Die Rastnocken liegen entlang der Breitenachse Y parallel an den Rastnuten an. Durch die zusätzliche S-förmige Ausgestaltung des Federelements 5 ist eine definierte Biegeachse des Federelements 5 über den kompletten Verstellweg entlang des ersten Rastelements 5 möglich. Somit wird eine konstante Verstellkraft über den kompletten Verstellweg erhalten. Durch die vorliegenden Ausführungsformen wird das Federelement 5 bei vertikaler Kraftbelastung gleichmäßig verformt.

In den Figuren 10a, 15a ist eine obere Stellung des Bedienelements 1 dargestellt. Hier ist der Abstand zwischen der Aufnahme 22 und dem ersten Element 2 minimal. In den Figuren 10b, 15b ist eine mittlere Stellung des Bedienelements 1 dargestellt. In den Figuren 10c und 15c ist das Bedienelement 1 in einer unteren Stellung gezeigt. Die Aufnahme 22 ist hier um einen maximalen Abstand von dem ersten Element 2, beziehungsweise der Durchgangsöffnung 9 entfernt. Der Innenzug des Bodenzugs 4 ist somit ebenso um einen maximalen Weg relativ zur Zughülle (heraus) bewegt. Der Verstellwinkel in dieser Konstruktion liegt in einem Bereich zwischen 0° und 32,5°. Zwischen oberster und unterster Stellung sind 3 weitere Raststufen spürbar. Der Verstellwinkel und die Raststufen können beliebig erweitert oder verkürzt werden, je nach Position des oberen und unteren Anschlags.

In Figur 16 ist ein Fahrzeugsitz 100 dargestellt, an welchem ein Bedienelement 1 angeordnet ist. Das Bedienelement kann prinzipiell an jeder zugänglichen Stelle des Fahrzeugsitzes angeordnet sein. Demnach ist die Erfindung nicht beschränkt auf die dargestellte Anordnungsposition.

**Bezugszeichenliste**

| 1 | Bedienelement |
| 2 | erstes Element |
| 3 | zweites Element |
| 4 | Bowdenzug |
| 5 | Federelement |
| 6 | erstes Rastelement |
| 7 | zweites Rastelement |
| 8 | plattenartiger Basisabschnitt |
| 9 | Durchgangsöffnung für den Bowdenzug |
| 10a | Krümmungsbogen |
| 10b | Krümmungsbogen |
| 11 | Führungsvorsprünge |
| 12 | Aufnahmen für die Führungsvorsprünge |
| 13 | Rastnuten |
| 14 | Raststufen |
| 15 | Rastnocken |
| 16 | kappenartiger Abschnitt |
| 17 | Grifffläche |
| 18 | Griffkappe |
| 19 | Grifffläche |
| 20 | Bohrungen |
| 21 | hakenartige Elemente |
| 22 | Aufnahme für Bowdenzug |
| 23 | Schnappverbindung 23 |
| 23a | Vorsprung |
| 23b | Öffnung |
| 24 | Armelement |
| 25 | Arm |
| 26 | Basisabschnitt |
| 27 | Hebellänge |
| D | Drehachse |
| Z | Höhenachse |

X      Längsachse
Y      Breitenachse

**Patentansprüche**

1.   Bedienelement (1) insbesondere für einen Fahrzeugsitz (100) , umfassend ein zweites Element (3), welches relativ zu einem ersten Element (2) beweglich angeordnet ist, wobei das zweite Element (3) mit einem Bowdenzug (4) verbunden ist und relativ zu dem ersten Element (2) arretierbar ist,

wobei das Bedienelement (1) ein Federelement (5) umfasst, an welchem ein erstes Rastelement (6) vorgesehen ist, wobei durch die Federkraft des Federelements (5) das erste Rastelement (6) gegen ein zweites Rastelement (7) drückt, wodurch das erste Rastelement (6) und das zweite Rastelement (7) verrasten, **dadurch gekennzeichnet, dass** das erste Element (2) und das Federelement (5) einteilig ausgebildet sind und das zweite Rastelement (7) an dem zweiten Element (3) angeordnet ist,
wobei
das zweite Element (3) um eine Drehachse (D) drehbar an dem ersten Element (2) angeordnet ist, wobei die Drehachse (D) sich entlang einer Breitenachse (Y) erstreckt und entlang einer Höhenachse (Z) unter dem ersten Rastelement (6) verläuft, wobei das erste Rastelement (6) eine entlang der Höhenachse (Z) konvexe Krümmung aufweist.

2.   Bedienelement (1) nach Anspruch 1, **dadurch gekennzeichnet, dass** das erste Element (2) einen plattenartigen Basisabschnitt (8) aufweist, mittels welchem das erste Element (2) an dem Fahrzeugsitz (100) anordenbar ist, wobei an dem plattenartigen Basisabschnitt (8) eine Durchgangsöffnung (9) für den Bowdenzug (4) vorgesehen ist.

3.   Bedienelement (1) nach einem der vorhergehenden Ansprüche, **dadurch gekennzeichnet, dass** das erste Element (2) und das Federelement (5) aus einem Kunststoff bestehen, wobei das erste Element (2) und das Federelement (5) aus dem gleichen Kunststoff bestehen, wobei das erste Element (2) und das Federelement (5) durch ein Spritzgussverfahren hergestellt sind.

4.   Bedienelement (1) nach einem der vorhergehenden Ansprüche, **dadurch gekennzeichnet, dass** das Federelement (5) eine gekrümmte Biegefeder und/oder Blattfeder ist, wobei das Federelement (5) zumindest zwei Krümmungsbögen (10a, 10b) aufweist, wobei das Federelement (5) zwei Krümmungsbögen (10a, 10b) aufweist, wobei das Federelement (5) einen S-förmigen Verlauf aufweist.

5.   Bedienelement (1) nach einem der vorhergehenden Ansprüche, **dadurch gekennzeichnet, dass** an dem ersten Element (2) zwei Führungsvorsprünge (11) angeordnet sind, welche sich jeweils entlang der Breitenachse (Y) erstrecken und jeweils in einer Aufnahme (12) an dem zweiten Element (3) angeordnet sind, wobei der Bowdenzug (4) an dem zweiten Element (3) derart befestigt ist, dass durch die Drehbewegung ein Innenzug des Bowdenzugs (4) bewegt wird.

6.   Bedienelement (1) nach einem der vorhergehenden Ansprüche, **dadurch gekennzeichnet, dass** das erste Rastelement (6) eine Mehrzahl an Rastnuten (13) aufweist, wobei die Rastnuten (6) durch Raststufen (14) abgetrennt sind.

7.   Bedienelement (1) nach Anspruch 6, **dadurch gekennzeichnet, dass** das zweite Rastelement (7) zumindest einen Rastnocken (15) aufweist, welcher in eine erste Teilmenge von Rastnuten (13) eingreift, wobei durch eine Drehbewegung des zweiten Elements (3) um die Drehachse (D) der Eingriff des zumindest einen Rastnocken (15) aus der ersten Teilmenge von Rastnuten (13) lösbar ist und zu einer zweiten Teilmenge an Rastnuten (13) verlagerbar ist, wobei durch eine Höhe der Raststufen (14) ein haptisches und/oder akustisches Feedback vorgebbar ist.

8.   Bedienelement (1) nach Anspruch 7, **dadurch gekennzeichnet, dass** sowohl in einer Eingriffsposition als auch in einer gelösten Position das erste Rastelement (5) und das zweite Rastelement (6) entlang der Breitenachse (Y) parallel ausgerichtet sind, wobei sowohl in einer Eingriffsposition als auch in einer gelösten Position der zumindest eine Rastnocken (15) und die erste Teilmenge von Rastnuten (13) entlang der Breitenachse (Y) parallel ausgerichtet sind.

9.   Bedienelement (1) nach einem der vorhergehenden Ansprüche, **dadurch gekennzeichnet, dass** das zweite Element (3) einen kappenartigen Abschnitt (16) umfasst, welcher zumindest abschnittsweise das erste Rastelement (6) und das Federelement (5) umschließt, wobei an dem kappenartigen Abschnitt (16) zumindest eine Grifffläche (17) vorgesehen ist, wobei an der zumindest einen Griffläche (17) haptische Beschichtungen und/oder Schutzbeschichtungen aufgebracht sind wobei an

der zumindest einen Griffläche (17) haptische Elemente angeordnet sind, wobei an der zumindest einen Griffläche (17) Identifikationselemente angeordnet sind, wobei an der zumindest einen Griffläche (17) lumineszierende oder leuchtende Elemente angeordnet sind.

10. Bedienelement (1) nach einem der vorhergehenden Ansprüche,
**dadurch gekennzeichnet, dass**
auf dem zweiten Element (3) eine Griffkappe (18) anordenbar ist, wobei das zweite Element (3) einen sich von der Drehachse (D) aus erstreckenden Hebelarm (19) umfasst, wobei die Griffkappe (18) an dem Hebelarm (19) anordenbar ist, wobei an der Griffkappe (18) zumindest eine Griffläche (20) vorgesehen ist, wobei an der zumindest einen Griffläche (20) haptische Beschichtungen und/oder Schutzbeschichtungen aufgebracht sind wobei an der zumindest einen Griffläche (20) haptische Elemente angeordnet sind, wobei an der zumindest einen Griffläche (20) Identifikationselemente angeordnet sind, wobei an der zumindest einen Griffläche (20) lumineszierende oder leuchtende Elemente angeordnet sind.

11. Fahrzeugsitz (100) mit einem Bedienelement (1) umfassend ein zweites Element (3), welches relativ zu einem ersten Element (2) beweglich angeordnet ist, wobei das zweite Element (3) mit einem Bowdenzug (4) verbunden ist und relativ zu dem ersten Element (2) arretierbar ist,

wobei das Bedienelement (1) ein Federelement (5) umfasst, an welchem ein erstes Rastelement (6) vorgesehen ist, wobei durch die Federkraft des Federelements (5) das erste Rastelement (6) gegen ein zweites Rastelement (7) drückt, wodurch das erste Rastelement (6) und das zweite Rastelement (7) verrasten, wobei das zweite Element (3) und das Federelement (5) einteilig ausgebildet sind und das zweite Rastelement (7) an dem ersten Element (2) angeordnet ist,
wobei
das zweite Element (3) um eine Drehachse (D) drehbar an dem ersten Element (2) angeordnet ist, **dadurch gekennzeichnet, dass** die Drehachse (D) sich entlang einer Breitenachse (Y) erstreckt und entlang einer Höhenachse (Z) unter dem ersten Rastelement (6) verläuft, wobei das erste Rastelement (6) eine entlang der Höhenachse (Z) konvexe Krümmung aufweist.

## Claims

1. A control element (1), in particular for a vehicle seat (100), comprising a second element (3) which is arranged to be movable relative to a first element (2),

wherein the second element (3) is connected to a Bowden cable (4) and is lockable relative to the first element (2),
wherein the control element (1) comprises a spring element (5) on which a first latching element (6) is provided,
wherein the first latching element (6) presses against a second latching element (7) through the spring force of the spring element (5), whereby the first latching element (6) and the second latching element (7) latch,
**characterized in that**
the first element (2) and the spring element (5) are formed in one piece and the second latching element (7) is arranged on the second element (3),
wherein the second element (3) is arranged on the first element (2) to be rotatable about an axis of rotation (D),
wherein the axis of rotation (D) extends along a horizontal axis (Y) and runs along a vertical axis (Z) below the first latching element (6),
wherein the first latching element (6) has a convex curvature along the vertical axis (Z).

2. The control element (1) according to claim 1,
**characterized in that**

the first element (2) has a plate-like base portion (8) by means of which the first element (2) can be arranged on the vehicle seat (100),
wherein a through opening (9) for the Bowden cable (4) is provided on the plate-like base portion (8).

3. The control element (1) according to any one of the preceding claims,
**characterized in that**

the first element (2) and the spring element (5) consist of a plastics material, wherein the first element (2) and the spring element (5) consist of the same plastics material,
wherein the first element (2) and the spring element (5) are produced by an injection-molding process.

4. The control element (1) according to any one of the preceding claims,
**characterized in that**

the spring element (5) is a curved spiral spring and/or leaf spring,
wherein the spring element (5) has at least two arcs of curvature (10a, 10b),

wherein the spring element (5) has two arcs of curvature (10a, 10b),
wherein the spring element (5) has an S-shaped profile.

5. The control element (1) according to any one of the preceding claims,
**characterized in that**

two guide projections (11) are arranged on the first element (2), which each extend along the horizontal axis (Y) and are each arranged in a receptacle (12) on the second element (3), wherein the Bowden cable (4) is fastened to the second element (3) in such a way that an inner cable of the Bowden cable (4) is moved by the rotary movement.

6. The control element (1) according to any one of the preceding claims,
**characterized in that**

the first latching element (6) has a plurality of latching grooves (13),
wherein the latching grooves (13) are separated by latching steps (14).

7. The control element (1) according to claim 6,
**characterized in that**

the second latching element (7) has at least one latching cam (15) which engages in a first subset of latching grooves (13),
wherein the engagement of the at least one latching cam (15) is releasable from the first subset of latching grooves (13) by a rotary movement of the second element (3) about the axis of rotation (D) and is displaceable to a second subset of latching grooves (13),
wherein a haptic and/or acoustic feedback can be specified by the height of the latching steps (14).

8. The control element (1) according to claim 7,
**characterized in that**
both in an engaged position and in a released position the first latching element (6) and the second latching element (7) are aligned parallel along the horizontal axis (Y), wherein both in an engaged position and in a released position the at least one latching cam (15) and the first subset of latching grooves (13) are aligned parallel along the horizontal axis (Y).

9. The control element (1) according to any one of the preceding claims,
**characterized in that**

the second element (3) comprises a cap-like portion (16) which at least in portions encloses the first latching element (6) and the spring element (5),
wherein at least one gripping surface (17) is provided on the cap-like portion (16), wherein haptic coatings and/or protective coatings are applied to at least one gripping surface (17),
wherein haptic elements are arranged on at least one gripping surface (17), wherein identification elements are arranged on at least one gripping surface (17), wherein luminescent or luminous elements are arranged on at least one gripping surface (17).

10. The control element (1) according to any one of the preceding claims,
**characterized in that**

a grip cap (18) can be arranged on the second element (3),
wherein the second element (3) comprises a lever arm (19) extending from the axis of rotation (D), wherein the grip cap (18) can be arranged on the lever arm (19),
wherein at least one gripping surface (20) is provided on the grip cap (18),
wherein haptic coatings and/or protective coatings are applied to at least one gripping surface (20),
wherein haptic elements are arranged on at least one gripping surface (20),
wherein identification elements are arranged on at least one gripping surface (20),
wherein luminescent or luminous elements are arranged on at least one gripping surface (20).

11. A vehicle seat (100) with a control element (1) comprising a second element (3) which is arranged to be movable relative to a first element (2),

wherein the second element (3) is connected to a Bowden cable (4) and is lockable relative to the first element (2),
wherein the control element (1) comprises a spring element (5) on which a first latching element (6) is provided,
wherein, by the spring force of the spring element (5), the first latching element (6) presses against a second latching element (7), whereby the first latching element (6) and the second latching element (7) latch,
wherein the second element (3) and the spring element (5) are formed in one piece and the second latching element (7) is arranged on the first element (2),
wherein the second element (3) is arranged on the first element (2) to be rotatable about an axis of rotation (D),

**characterized in that** the axis of rotation (D) extends along a horizontal axis (Y) and runs along a vertical axis (Z) below the first latching element (6),

wherein the first latching element (6) has a convex curvature along the vertical axis (Z).

**Revendications**

1. Élément de commande (1), en particulier pour un siège de véhicule (100), comportant un second élément (3), lequel est disposé pour être déplaçable par rapport à un premier élément (2), le second élément (3) étant relié à un câble Bowden (4) et étant apte à être verrouillé par rapport au premier élément (2),

   l'élément de commande (1) comportant un élément ressort (5) sur lequel est disposé un premier élément d'encliquetage (6), le premier élément d'encliquetage (6) pressant contre un second élément d'encliquetage (7) par la force élastique de l'élément ressort, ce par quoi le premier élément d'encliquetage (6) et le second élément d'encliquetage (7) s'encliquètent,
   **caractérisé par le fait que**
   le premier élément (2) et l'élément ressort (5) sont réalisés d'un seul tenant et le second élément d'encliquetage (7) est disposé sur le second élément (3),
   le second élément (3) étant disposé sur le premier élément (2) en étant apte à tourner autour d'un axe de rotation (D), l'axe de rotation (D) s'étendant le long d'un axe de largeur (Y) et passant sous le premier élément d'encliquetage (6) le long d'un axe de hauteur (Z), le premier élément d'encliquetage (6) présentant une courbure convexe le long de l'axe de hauteur (Z).

2. Élément de commande (1) selon la revendication 1,
   **caractérisé par le fait que**
   le premier élément (2) présente une partie de base en forme de plaque (8) au moyen de laquelle le premier élément (2) est apte à être disposé sur le siège de véhicule (100), une ouverture traversante (9) pour le câble Bowden (4) étant prévue dans la partie de base en forme de plaque (8).

3. Élément de commande (1) selon l'une des revendications précédentes,
   **caractérisé par le fait que**
   le premier élément (2) et l'élément ressort (5) sont en une matière plastique, le premier élément (2) et l'élément ressort (5) étant réalisés dans la même matière plastique, le premier élément (2) et l'élément ressort (5) étant fabriqués par un procédé de moulage par injection.

4. Élément de commande (1) selon l'une des revendications précédentes,
   **caractérisé par le fait que**
   l'élément ressort (5) est un ressort de flexion et/ou ressort à lame courbe, l'élément ressort (5) présentant au moins deux arcs de courbure (10a, 10b), l'élément ressort (5) présentant deux arcs de courbure (10a, 10b), l'élément ressort (5) présentant un profil en forme de S.

5. Élément de commande (1) selon l'une des revendications précédentes,
   **caractérisé par le fait que**
   deux saillies de guidage (11) sont disposées sur le premier élément (2), lesquelles s'étendent chacune le long de l'axe de largeur (Y) et sont chacune disposées dans un réceptacle (12) sur le second élément (3), le câble Bowden (4) étant fixé au second élément (3) de telle sorte qu'un câble interne du câble Bowden (4) est déplacé par le mouvement de rotation.

6. Élément de commande (1) selon l'une des revendications précédentes,
   **caractérisé par le fait que**
   le premier élément d'encliquetage (6) présente une pluralité de rainures d'encliquetage (13), les rainures d'encliquetage (6) étant séparées par des crans d'encliquetage (14).

7. Élément de commande (1) selon la revendication 6,
   **caractérisé par le fait que**
   le second élément d'encliquetage (7) présente au moins une came d'encliquetage (15), laquelle s'engage dans un premier sous-ensemble de rainures d'encliquetage (13), l'engagement de l'au moins une came d'encliquetage (15) étant libérable à partir du premier sous-ensemble de rainures d'encliquetage (13) par un mouvement de rotation du second élément (3) autour de l'axe de rotation (D) et étant déplaçable vers un second sous-ensemble de rainures d'encliquetage (13), un retour haptique et/ou acoustique étant apte à être prédéfini par une hauteur des crans d'encliquetage (14).

8. Élément de commande (1) selon la revendication 7,
   **caractérisé par le fait que**,
   non seulement dans une position d'engagement mais encore dans une position libérée, le premier élément d'encliquetage (5) et le second élément d'encliquetage (6) sont alignés parallèlement le long de l'axe de largeur (Y), l'au moins une came d'encliquetage (15) et le premier sous-ensemble de rainures d'encliquetage (13) étant alignés parallèlement le long de l'axe de largeur (Y) non seulement dans une position d'engagement mais encore dans une position libérée.

**9.** Élément de commande (1) selon l'une des revendications précédentes,
**caractérisé par le fait que**
le second élément (3) comporte une partie en forme de capuchon (16), laquelle entoure au moins par sections le premier élément d'encliquetage (6) et l'élément ressort (5), au moins une surface de préhension (17) étant prévue sur la partie en forme de capuchon (16), des revêtements haptiques et/ou des revêtements de protection étant appliqués sur l'au moins une surface de préhension (17), des éléments haptiques étant disposés sur l'au moins une surface de préhension (17), des éléments d'identification étant disposés sur l'au moins une surface de préhension (17), des éléments luminescents ou lumineux étant disposés sur l'au moins une surface de préhension (17).

**10.** Élément de commande (1) selon l'une des revendications précédentes,
**caractérisé par le fait qu'**
un capuchon de ptéhension (18) est apte à être disposé sur le second élément (3), le second élément (3) comportant un bras de levier (19) s'étendant à partir de l'axe de rotation (D), le capuchon de ptéhension (18) étant apte à être disposé sur le bras de levier (19), au moins une surface de préhension (20) étant prévue sur le capuchon de préhension (18), des revêtements haptiques et/ou des revêtements de protection étant appliqués sur l'au moins une surface de préhension (20), des éléments haptiques étant disposés sur l'au moins une surface de préhension (20), des éléments d'identification étant disposés sur l'au moins une surface de préhension (20), des éléments luminescents ou lumineux étant disposés sur l'au moins une surface de préhension (20).

**11.** Siège de véhicule (100) avec un élément de commande (1) comportant un second élément (3), lequel est disposé pour être déplaçable par rapport à un premier élément (2), le second élément (3) étant relié à un câble Bowden (4) et étant apte à être verrouillé par rapport au premier élément (2),

l'élément de commande (1) comportant un élément ressort (5) sur lequel est disposé un premier élément d'encliquetage (6), le premier élément d'encliquetage (6) pressant contre un second élément d'encliquetage (7) par la force élastique de l'élément ressort (5), ce par quoi le premier élément d'encliquetage (6) et le second élément d'encliquetage (7) s'encliquètent, le second élément (3) et l'élément ressort (5) étant réalisés d'un seul tenant et le second élément d'encliquetage (7) étant disposé sur le premier élément (2),
le second élément (3) étant disposé sur le premier élément (2) en étant apte à tourner autour d'un axe de rotation (D),
**caractérisé par le fait que**
l'axe de rotation (D) s'étend le long d'un axe de largeur (Y) et passe sous le premier élément d'encliquetage (6) le long d'un axe de hauteur (Z), le premier élément d'encliquetage (6) présentant une courbure convexe le long de l'axe de hauteur (Z).

Fig. 1

Fig. 2

Fig. 3a

Fig. 3b

Fig. 4b

Fig. 4a

Fig. 5a

Fig. 5b

Fig. 6a

Fig. 6b

Fig. 7

Fig. 8

Fig. 9

Fig. 10a

Fig. 10b

Fig. 10c

Fig. 11

Fig. 12

Fig. 13

Fig. 14

Fig. 15a

Fig. 15b

Fig. 15c

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011014234 A1
- WO 2020074684 A1
- US 5662000 A